# EUROPEAN PATENT APPLICATION

(11) **EP 4 725 639 A1**
(43) Date of publication of application: **15.04.2026**
(21) Application number: 24895789.6
(22) Date of filing: 20.08.2024
(51) Int. Cl.: B23K 26/16, B23K 26/21, B23K 26/70, B08B 13/00, B08B 5/04

(54) **DUST REMOVAL DEVICE AND BATTERY PRODUCTION SYSTEM**

(30) Priority: 30.11.2023 CN 202323280379 U
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: WANG, Tengteng, Ningde, Fujian 352100 (CN); QUE, Tianxiang, Ningde, Fujian 352100 (CN); PAN, Wensheng, Ningde, Fujian 352100 (CN); FAN, Xiang, Ningde, Fujian 352100 (CN)
(74) Representative: Ran, Handong
(86) International application number: PCT/CN2024/113394
(87) International publication number: WO 2025/112688

(57) **Abstract**

The present application provides a dust removal device and a battery production system. The dust removal device comprises dust removal assemblies and a first driving assembly. Each dust removal assembly comprises a dust removal brush, and the first driving assembly is connected to the dust removal brush and is configured to be capable of driving the dust removal brush to move in a first direction. In this way, the dust removal brush can clean weld spatters while moving, allowing for a large area of removal of weld spatters on hollow poles of battery cell preforms; and furthermore, the dust removal brush can achieve cleaning of strip-shaped weld marks, improving the cleaning effect of the dust removal device.

## Description

### CROSS-REFERENCE TO RELATED APPLICATIONS

This application claims priority to Chinese Patent Application No. 202323280379X, filed on November 30, 2023, which is incorporated herein by reference in its entirety.

### TECHNICAL FIELD

This application relates to the field of battery technology, and in particular, to a dust removal apparatus and a battery production system.

### BACKGROUND

Welding is an important process in battery production, and processes such as laser welding generate a large amount of substances such as weld slag. The weld slag, due to the small size, easily causes contamination of production equipment, affecting the performance or service life of the equipment. Therefore, cleaning weld slag after welding is a technical issue that urgently needs to be addressed.

### SUMMARY

This application is intended to provide a dust removal apparatus and a battery production system to efficiently clean weld slag generated from welding.

To address the above technical issue, according to a first aspect, a technical solution of this application provides a dust removal apparatus. The dust removal apparatus includes a dust removal assembly, a first drive assembly, and a dust removal cover, where the dust removal assembly includes a dust removal brush, the first drive assembly is connected to the dust removal brush and is configured to be able to drive the dust removal brush to move along a first direction; the dust removal brush is disposed within the dust removal cover and is configured to be able to move back and forth along the first direction within the dust removal cover; and a port of the dust removal cover includes two opposite long sides and two opposite short sides, where the long sides extend along the first direction, and the short sides are respectively connected to the two long sides.

In the above technical solution, the dust removal apparatus includes the dust removal assembly and the first drive assembly, the dust removal assembly includes the dust removal brush, and the first drive assembly is configured to be able to drive the dust removal brush to move along the first direction. This allows the dust removal brush to sweep weld slag while moving, thereby removing weld slag over a larger area on a hollow electrode post of a battery cell preform. Further, the dust removal brush can clean strip-shaped weld marks, thereby improving a cleaning effect of the dust removal apparatus. The dust removal apparatus further includes the dust removal cover, and the port of the dust removal cover includes two long sides extending along the first direction and two short sides respectively connected to the two long sides, making the shape of the port of the dust removal cover match the shape of the hollow electrode post of the battery cell preform. This allows the dust removal cover to exactly cover the hollow electrode post of the battery cell preform, preventing easy detachment of the two components and exposure of the hollow electrode post of the battery cell preform.

To address the above technical issue, according to a second aspect, another technical solution of this application provides a dust removal apparatus. The dust removal apparatus includes a dust removal assembly, a first drive assembly, and a dust removal cover, where the dust removal assembly includes a dust removal brush, the first drive assembly is connected to the dust removal brush and is configured to be able to drive the dust removal brush to move along a first direction; the dust removal brush is disposed within the dust removal cover and is configured to be able to move back and forth along the first direction within the dust removal cover; and the dust removal assembly further includes a plug, where the plug is disposed within the dust removal cover.

In the above technical solution, with the dust removal cover provided and the dust removal brush confined within the dust removal cover, the hollow electrode post of the battery cell preform can be isolated from the external environment, reducing the risk of weld slag splashing or scattering to other parts or the environment during cleaning of weld slag by the dust removal assembly, thereby reducing contamination. Moreover, the dust removal cover also limits the movement range of the dust removal brush, reducing contact between the dust removal brush and other parts, thereby reducing scattering of weld slag from the dust removal brush. The plug is disposed within the dust removal cover, and the plug can be pressed onto the interior of the hollow electrode post of the battery cell preform, sealing a gap at a bottom opening of the hollow electrode post of the battery cell preform. This can reduce the risk of weld slag entering the interior of the battery cell preform through the gap at the bottom opening of the hollow electrode post.

In some embodiments, a sidewall of the dust removal cover is provided with an air inlet.

In the above technical solution, an air inlet is disposed on the sidewall of the dust removal cover, so that external air can enter the dust removal cover, allowing weld slag dislodged by the dust removal brush to be carried away by the airflow, thereby achieving the purpose of cleaning weld slag.

In some embodiments, a port of the dust removal cover is provided with a flexible protective sleeve.

In the above technical solution, the flexible protective sleeve is provided at the port of the dust removal cover, which can protect the port of the dust removal cover, and can also reduce the damage caused by the port of the dust removal cover to the hollow electrode post or other components of the battery cell preform during alignment and installation of the dust removal cover to the battery cell preform.

In some embodiments, the port of the dust removal cover includes two opposite long sides and two opposite short sides, where the long sides extend along the first direction, and the short sides are respectively connected to the two long sides.

In the above technical solution, the port of the dust removal cover includes two long sides extending along the first direction and two short sides respectively connected to the two long sides, making the shape of the port of the dust removal cover match the shape of the hollow electrode post of the battery cell preform. This allows the dust removal cover to exactly cover the hollow electrode post of the battery cell preform, preventing easy detachment of the two components and exposure of the hollow electrode post of the battery cell preform.

In some embodiments, one end of the plug extends out of the port of the dust removal cover.

In the above technical solution, one end of the plug extends out of the port of the dust removal cover, facilitating its insertion into and extension through the gap at the bottom opening of the hollow electrode post, and reducing the risk of weld slag entering the interior of the battery cell preform and causing contamination.

In some embodiments, the plug is spaced apart from an inner wall surface of the dust removal cover and extends along the first direction, and the dust removal brush is located at a bottom of the plug.

In the above technical solution, the plug is spaced apart from the inner wall surface of the dust removal cover and extends along the first direction, and the dust removal brush is located at the bottom of the plug, allowing the plug to seal the gap, and the dust removal brush to clean the weld slag around electrode tabs. This further reduces the risk of weld slag falling, without obstructing the movement of the dust removal brush along the first direction.

In some embodiments, a surface of the plug close to the dust removal brush is a planar surface, and the dust removal brush is cylindrical and is tangent to or spaced apart from the planar surface.

In the above technical solution, the dust removal brush is designed as cylindrical, minimizing the air resistance to the dust removal brush during movement. The absence of edges makes it easier to clean corner areas. Additionally, the surface of the plug close to the dust removal brush is a planar surface and tangent to or spaced apart from the dust removal brush, allowing the dust removal brush to translate along an extension direction of the planar surface of the plug. This also ensures that the plug can seal the gap at the bottom opening of the hollow electrode post without obstructing the translation of the dust removal brush.

In some embodiments, a material of the plug includes rubber or silicone.

In the above technical solution, the material of the plug includes rubber or silicone, providing the plug with elasticity. This can reduce the damage to the hollow electrode post during insertion of the plug into the gap at the bottom opening of the hollow electrode post and improving the sealing performance on the gap.

In some embodiments, the dust removal apparatus further includes a vibration assembly, where the vibration assembly is connected to the dust removal brush and is configured to be able to cause the dust removal brush to vibrate; and the first drive assembly is further connected to the vibration assembly and is configured to be able to drive the dust removal brush and the vibration assembly to move together along the first direction.

In the above technical solution, the dust removal apparatus includes the vibration assembly, utilizing high-frequency vibration to dislodge detachable weld slag and adsorbed weld slag from the cleaned weld marks. This also allows the dust removal brush to vibrate while moving during the cleaning of weld slag, improving cleaning efficiency and cleaning effectiveness.

To address the above technical issue, according to a third aspect, still another technical solution of this application provides a dust removal apparatus. The dust removal apparatus includes a dust removal assembly and a first drive assembly, where the dust removal assembly includes a dust removal brush; the first drive assembly is connected to the dust removal brush and is configured to be able to drive the dust removal brush to move along a first direction; and the dust removal apparatus further includes a vibration assembly, where the vibration assembly is connected to the dust removal brush and is configured to be able to cause the dust removal brush to vibrate; and the first drive assembly is further connected to the vibration assembly and is configured to be able to drive the dust removal brush and the vibration assembly to move together along the first direction.

In the above technical solution, the dust removal apparatus includes the vibration assembly, utilizing high-frequency vibration to dislodge detachable weld slag and adsorbed weld slag from the cleaned weld marks. This also allows the dust removal brush to vibrate while moving during the cleaning of weld slag, improving cleaning efficiency and cleaning effectiveness.

In some embodiments, the dust removal assembly further includes a dust removal cover, where the dust removal brush is disposed within the dust removal cover and is configured to be able to move back and forth along the first direction within the dust removal cover; and the vibration assembly includes a vibration motor and a mounting shaft, where the vibration motor is disposed outside the dust removal cover, one end of the mounting shaft is mounted on the vibration motor, and the other end extends into the dust removal cover and is connected to the dust removal brush.

In the above technical solution, with the dust removal cover provided and the dust removal brush confined within the dust removal cover, the hollow electrode post of the battery cell preform can be isolated from the external environment, reducing the risk of weld slag splashing or scattering to other parts or the environment during cleaning of weld slag by the dust removal assembly, thereby reducing contamination. Moreover, the dust removal cover also limits the movement range of the dust removal brush, reducing contact between the dust removal brush and other parts, thereby reducing scattering of weld slag from the dust removal brush; the vibration assembly includes the vibration motor and the mounting shaft to implement vibration of the dust removal brush, making the apparatus simple, easy to install, and easy to implement.

In some embodiments, the dust removal apparatus further includes an air extraction assembly and a mounting cavity, where the air extraction assembly is in communication with the mounting cavity, one end of the dust removal cover far away from a port of the dust removal cover is in communication with the mounting cavity, a sidewall of the mounting cavity at an end facing away from the dust removal cover is provided with a through hole, the mounting shaft extends through the through hole into the dust removal cover, and the through hole extends along the first direction.

In the above technical solution, the air extraction assembly can extract air during the process of the dust removal brush sweeping weld slag, creating a negative pressure within the mounting cavity and the dust removal cover, thereby allowing loose weld slag to enter the air extraction assembly. The mounting cavity is connected between the dust removal cover and the air extraction assembly, providing a buffer space to reduce the risk of excessive negative pressure damaging the dust removal brush and/or the battery cell preform within the dust removal cover. The mounting cavity has a through hole in a sidewall at an end facing away from the dust removal cover, allowing the mounting shaft to extend through the through hole, move along the first direction, and drive the dust removal brush to move along the first direction.

In some embodiments, the mounting cavity includes an air outlet in communication with the air extraction assembly; and along the first direction, the air outlet and an air inlet of the dust removal cover are located on opposite sides of the dust removal cover and the mounting cavity.

In the above technical solution, an air outlet is disposed in the mounting cavity to extract gases from the dust removal cover and the mounting cavity through the air extraction assembly. Further, combined with the air inlet disposed in the dust removal cover, air from the environment can continuously enter the dust removal cover and the mounting cavity for ventilation during the dust removal process, allowing airflow to continuously carry away weld slag and reducing the risk of damage to the battery cell preform caused by excessive negative pressure within the dust removal cover due to over-extraction by the air extraction assembly during the dust removal process. Along the first direction, the air outlet and the air inlet of the dust removal cover are located on opposite sides of the dust removal cover and the mounting cavity, that is, on opposite sides of the dust removal brush, allowing gas to flow from one side of the dust removal brush to the other side to carry away weld slag from the dust removal brush more easily.

In some embodiments, the sidewall of the mounting cavity facing away from the dust removal cover is provided with two flexible shielding members; and along a third direction perpendicular to the first direction, the two flexible shielding members are respectively disposed on opposite sides of the through hole and are joined together to cover the through hole.

In the above technical solution, the sidewall of the mounting cavity facing away from the dust removal cover is provided with two flexible shielding members, and the two flexible shielding members are joined together to cover the through hole, allowing the through hole to be covered by the two flexible shielding members during the movement of the mounting shaft along the first direction within the through hole. This reduces the risk of airflow entering the mounting cavity through the through hole, and ensures that airflow enters the mounting cavity primarily through the air inlet, facilitating the removal of weld slag from the dust removal brush.

In some embodiments, the flexible shielding member is a brush.

In the above technical solution, the flexible shielding member is a brush, further sweeping or absorbing the weld slag on the mounting shaft extending through the through hole. This can reduce the weld slag adsorbed on the mounting shaft, and reduce the risk of weld slag splashing into the interior of the battery cell preform during vibration of the mounting shaft.

In some embodiments, an end portion of the brush is provided with a magnetic member, the magnetic members at the end portions of the two brushes attract each other, and the mounting shaft includes a ferromagnetic material.

In the above technical solution, the brush is provided with a magnetic member at an end portion, and the magnetic members at the end portions of the two brushes attract each other, allowing the two flexible shielding members to close quickly under magnetic attraction after the mounting shaft passes through; the mounting shaft includes a ferromagnetic material, so that the permanent magnets at the end portions of the brushes are attracted to the mounting shaft wherever the mounting shaft moves, better sealing the through hole and reducing the risk of airflow entry.

In some embodiments, the mounting shaft is sleeved with a cover plate, where the cover plate is configured to be able to move along the first direction together with the mounting shaft and cover the through hole during movement.

In the above technical solution, the mounting shaft is sleeved with a cover plate, and the cover plate is configured to be able to move along the first direction together with the mounting shaft and cover the through hole during movement, sealing the through hole more effectively and reducing the risk of airflow entry.

In some embodiments, the dust removal apparatus further includes an axial drive assembly, where the axial drive assembly is connected to the mounting shaft, and the axial drive assembly is configured to be able to drive the dust removal brush to extend and retract along an axial direction of the mounting shaft.

In the above technical solution, the dust removal apparatus includes the axial drive assembly, and the axial drive assembly can drive the dust removal brush to extend and retract along the axial direction of the mounting shaft, so that after dust removal is completed, the drive assembly can be used to drive the mounting shaft to move with the dust removal brush in a direction leaving the battery cell preform, so as to clean residual weld slag on the dust removal brush through the negative pressure within the dust removal cover. This eliminates the need for additional cleaning of the dust removal brush and the dust removal cover after the dust removal apparatus is detached from the battery cell preform, thereby reducing the risk of contaminating other battery cell preforms when the dust removal apparatus is reused to clean these battery cell preforms.

In some embodiments, the dust removal apparatus further includes a second drive assembly, where the second drive assembly is connected to the dust removal assembly and the vibration assembly, and the second drive assembly is configured to be able to drive the dust removal assembly and the vibration assembly to move along a second direction, the second direction intersecting with the first direction.

In the above technical solution, the dust removal apparatus includes the second drive assembly, and the second drive assembly can drive the dust removal assembly and the vibration assembly to move along the second direction, allowing the dust removal assembly to match and mount to the battery cell preform to be cleaned. The operation is simple, reducing the manual installation steps, thereby enhancing automation.

In some embodiments, the first direction and the second direction are perpendicular to each other and both parallel to a horizontal direction.

In the above technical solution, the first direction and the second direction are perpendicular to each other and both parallel to the horizontal direction, allowing the dust removal apparatus of this application to clean the battery cell preforms placed horizontally.

In some embodiments, the dust removal apparatus further includes a control circuit, where the control circuit is electrically connected to the vibration assembly, where the first drive assembly, the second drive assembly, the air extraction assembly, and the axial drive assembly, respectively; and the control circuit is configured to:
in response to receipt of a clean instruction, cause the air extraction assembly to extract air from the dust removal cover to create a negative pressure, and cause the second drive assembly to drive the dust removal assembly to move along the second direction from an initial position toward a battery cell preform to a preset position;
in response to the dust removal assembly having moved to the preset position, cause the vibration assembly to vibrate the dust removal brush and cause the first drive assembly to drive the dust removal assembly to move back and forth along the first direction, to clean the battery cell preform; and
in response to completion of cleaning, cause the second drive assembly to drive the dust removal assembly to move along the second direction from the preset position back to the initial position, and cause the axial drive assembly to control the dust removal brush to retract from an original position toward an interior of the dust removal cover along the axial direction of the mounting shaft, stay for a preset time, and then extend back to the original position.

In the above technical solution, the control circuit is arranged to control the operation of the vibration assembly, the first drive assembly, the second drive assembly, the air extraction assembly, and the axial drive assembly, allowing for precise current control to ensure the normal operation of the entire dust removal apparatus, while providing circuit safety protection and circuit conversion functions.

In some embodiments, the dust removal apparatus includes two symmetrically arranged and spaced dust removal assemblies, and the first drive assembly, the vibration assembly, the axial drive assembly, the second drive assembly, the air extraction assembly, and/or the mounting cavity driving the movement of the two dust removal assemblies and/or dust removal brushes respectively.

In the above technical solution, through provision of two symmetrically arranged and spaced dust removal assemblies, and the rotation drive assembly, the first drive assembly, the vibration assembly, the axial drive assembly, the second drive assembly, the air extraction assembly, and/or the mounting cavity driving the movement of the two dust removal assemblies and/or the dust removal brush, weld slag on two hollow electrode posts of the battery cell preform can be cleaned simultaneously, improving cleaning efficiency.

To address the above technical issue, according to a fourth aspect, still another technical solution in this application provides a battery production system, where the battery production system includes a welding apparatus and a dust removal apparatus, where the dust removal apparatus is the dust removal apparatus provided in any one of the above embodiments.

In the above technical solution, the dust removal apparatus includes the dust removal assembly and the first drive assembly, the dust removal assembly includes the dust removal brush, and the first drive assembly is configured to be able to drive the dust removal brush to move along the first direction. This allows the dust removal brush to sweep weld slag while moving, thereby removing weld slag over a larger area on the hollow electrode post of the battery cell preform. Further, the dust removal brush can clean strip-shaped weld marks, thereby improving a cleaning effect of the dust removal apparatus.

### BRIEF DESCRIPTION OF DRAWINGS

To describe the technical solutions in the embodiments of this application more clearly, the following briefly describes the accompanying drawings required for describing the embodiments. Apparently, the accompanying drawings in the following description show merely some embodiments of this application, and persons of ordinary skill in the art may still derive other drawings from these accompanying drawings without creative efforts.
FIG. 1 is a schematic structural diagram of a battery cell preform;
FIG. 2 is a schematic diagram of a partial structure of the battery cell preform in FIG. 1;
FIG. 3 is a schematic structural diagram of a dust removal apparatus according to some embodiments of this application;
FIG. 4 is a schematic structural diagram of the dust removal apparatus in FIG. 3 from another perspective;
FIG. 5 is a schematic structural diagram of a dust removal cover, a plug, and a mounting cavity according to some embodiments of this application;
FIG. 6 is a schematic structural diagram of a dust removal cover, a plug, and a mounting cavity according to some other embodiments;
FIG. 7 is a schematic structural diagram of a mounting cavity according to some embodiments of this application;
FIG. 8 is a schematic structural diagram of a dust removal apparatus according to some other embodiments of this application; and
FIG. 9 is a schematic structural diagram of a battery production system according to some embodiments of this application.

### Description of reference signs:

1: dust removal apparatus, 10: dust removal assembly, 11: dust removal brush, 12: dust removal cover, 120: sidewall of dust removal cover, 121: air inlet, 122: port, 123: long side, 124: short side, 13: flexible protective sleeve, 14: plug, 140: surface of plug close to dust removal brush, 20: first drive assembly, 21: cylinder mounting plate, 22: transverse cylinder, 23: transverse slide rail, 30: vibration assembly, 31: vibration motor, 32: mounting shaft, 40: air extraction assembly, 50: mounting cavity, 51: sidewall of mounting cavity at an end facing away from dust removal cover, 52: through hole, 53: air outlet, 54: flexible shielding member, 60: axial drive assembly, 61: axial transverse cylinder, 62: axial transverse slide block, 70: second drive assembly, 71: support plate, 72: power mechanism, 73: first slide rail, 80: second direction transverse barrier, 100: dust removal cover mounting plate, 200: control circuit, 1000: battery production system, 2: welding apparatus, 3: fixture, 2000: battery cell preform, 2100: hollow electrode post, 2200: gap, 2300: electrode tab, 2400: housing, and 2500: cell.

### DESCRIPTION OF EMBODIMENTS

The technical solutions in the embodiments of this application will be clearly and completely described below with reference to the drawings in the embodiments of this application. Obviously, the described embodiments are only some of the embodiments of this application, not all embodiments. Based on the embodiments in this application, all other embodiments obtained by those skilled in the art without creative effort fall within the scope of protection of this application.

Unless otherwise defined, all technical and scientific terms used herein have the same meaning as commonly understood by those skilled in the technical field of this application; the terms used herein are for the purpose of describing specific embodiments only and are not intended to limit this application; the terms "include" and "have" in the specification, claims, and the above description of the drawings of this application, as well as any variations thereof, are intended to cover non-exclusive inclusion. For example, a process, method, system, product, or device that includes a series of steps or units is not limited to the listed steps or units, but may optionally include steps or units not listed, or may optionally include other steps or units inherent to these processes, methods, products, or devices.

Reference to "embodiment" herein means that a particular feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of this application, technical terms such as "first", "second", and "third" are used only to distinguish different objects and should not be understood as indicating or implying relative importance or implying the number, specific order, or hierarchical relationship of the indicated technical features. In the description of the embodiments of this application, "multiple" means two or more (including two), such as two or three, unless otherwise specifically defined; similarly, "multiple groups" refers to two or more groups (including two groups), and "multiple pieces" refers to two or more pieces (including two pieces).

In the description of the embodiments of this application, the term "and/or" merely describes an association relationship between associated objects, indicating three possible relationships, for example, A and/or B may indicate: A alone, both A and B, or B alone. Additionally, the character "/" herein generally indicates an "or" relationship between the associated objects.

In the description of the embodiments of this application, technical terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" indicate orientations or positional relationships based on the relative orientations or positional relationships of components in a specific posture (as shown in the drawings), and are used only for the convenience of describing the embodiments of this application and simplifying the description, and do not indicate or imply that the referred apparatus or element must have a specific orientation, be constructed, or operated in a specific orientation, and thus should not be construed as limiting the embodiments of this application.

In the description of the embodiments of this application, unless otherwise expressly specified and limited, technical terms such as "install", "connect", "connection", and "fix" should be understood broadly, for example, as fixed connections, detachable connections, or integral formations; they may be mechanical connections or electrical connections; they may be direct connections or indirect connections through an intermediate medium, or internal communication or interaction between two elements. Those skilled in the art can understand the specific meanings of the above terms in the embodiments of this application based on specific circumstances.

In this application, a battery cell may include a lithium-ion battery, a sodium-ion battery, a magnesium-ion battery, or the like. The battery cell may be cylindrical, flat, or any other shapes. Battery cells are generally divided into three types based on packaging: cylindrical battery cells, prismatic battery cells, and pouch battery cells. A battery cell preform is a structure of a battery cell before electrode posts are welded. For ease of explanation, the following embodiments use a lithium-ion battery as an example.

In the field of new energy, lithium-ion batteries, due to their advantages such as high voltage, high capacity, low consumption, no memory effect, no pollution, small size, low internal resistance, low self-discharge, and high cycle life, have become a focus of high-tech development.

In the production process of lithium-ion batteries, welding is an important step. For example, a traditional battery cell includes a housing, a cell, an adapter sheet, and a top end cover. The cell has an electrode tab, and the top end cover is provided with an electrode post. The cell and the adapter sheet are loaded into the housing from the top port of the housing, and the top end cover covers the top of the housing. During production, the electrode tab is first welded to the adapter sheet, and then the adapter sheet is welded to the electrode post. Since dot-shaped weld marks are produced in the process of welding the electrode post and the adapter sheet in traditional battery cells, the dust removal brush does not need to move during the dust removal process.

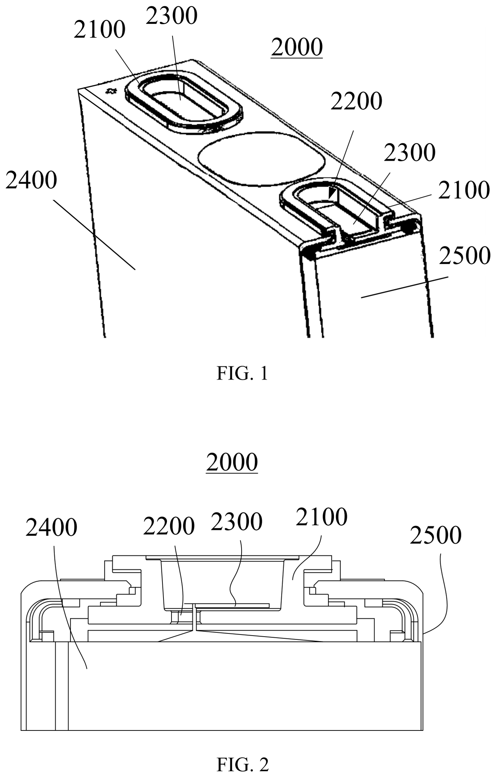

To meet market demands, the applicant has developed a new type of battery cell. Referring to FIG. 1 and FIG. 2, FIG. 1 is a schematic structural diagram of a new battery cell preform developed by the applicant, and FIG. 2 is a schematic structural diagram of a portion of the battery cell preform in FIG. 1. The new battery cell preform 2000 includes a housing 2400, a cell 2500, a bottom end cover (not shown in the figures), and a hollow electrode post 2100. The cell 2500 is loaded into the housing 2400 from a bottom port of the housing 2400, and the bottom end cover covers the bottom of the housing 2400. The hollow electrode post 2100 is embedded in a top wall of the housing 2400, and the hollow electrode post 2100 includes an annular sidewall and a bottom wall, the bottom wall of the hollow electrode post 2100 having an opening (not labeled in the figures). The cell 2500 has an electrode tab 2300, and the electrode tab 2300 is inserted into the hollow electrode post 2100 through the opening in the bottom wall of the hollow electrode post 2100, bent, and then welded to the bottom wall of the hollow electrode post 2100. Since the hollow electrode post 2100 of the new battery cell preform 2000 is directly welded to the electrode tab 2300, strip-shaped weld marks are produced in the welding process, and the dust removal brush needs to move back and forth along a width direction of the electrode tab 2300 during dust removal. Moreover, a gap 2200 is present between the electrode tab 2300 and a sidewall of the opening in the bottom wall of the hollow electrode post 2100, and processes such as laser welding generate a large amount of substances such as weld slag. The weld slag, due to its small size, is easily adsorbed by structures such as the electrode plate or falls into the interior of the battery cell preform 2000 through the gap 2200 of the battery cell preform 2000, causing contamination and affecting the performance or service life of the battery. Therefore, cleaning weld slag after welding is a technical issue that urgently needs to be addressed.

To address one or more of the above technical problems, an embodiment of this application provides a dust removal apparatus. The dust removal apparatus includes a dust removal assembly and a first drive assembly, where the dust removal assembly includes a dust removal brush, and the first drive assembly is connected to the dust removal brush and is configured to be able to drive the dust removal brush to move along a first direction. Since the dust removal brush can sweep weld slag while moving, weld slag can be removed over a larger area on a hollow electrode post of a battery cell preform. Further, the dust removal brush can clean strip-shaped weld marks, thereby improving a cleaning effect of the dust removal apparatus.

The following describes this application in detail with reference to the accompanying drawings and embodiments.

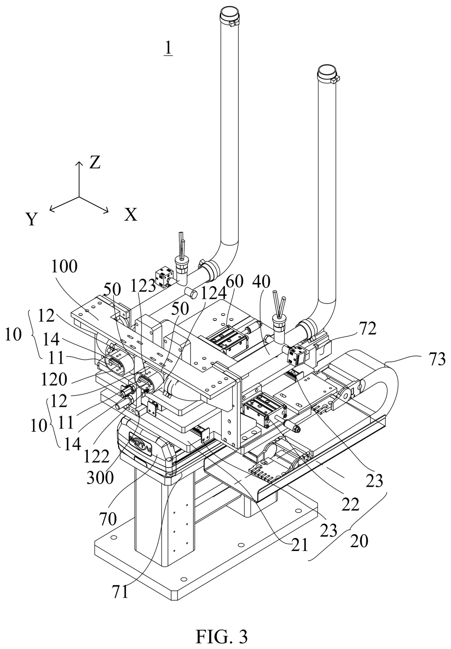

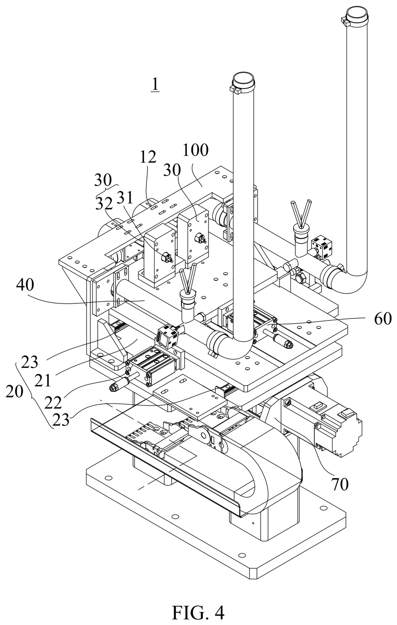

Referring to FIG. 3 and FIG. 4, FIG. 3 is a schematic structural diagram of a dust removal apparatus 1 according to some embodiments of this application; and FIG. 4 is a schematic structural diagram of the dust removal apparatus in FIG. 3 from another perspective.

The dust removal apparatus 1 provided in this application includes a dust removal assembly 10 and a first drive assembly 20, where the dust removal assembly 10 includes a dust removal brush 11; and the first drive assembly 20 is connected to the dust removal brush 11 and is configured to be able to drive the dust removal brush 11 to move along a first direction X.

The dust removal assembly 10 is configured to clean weld slag on the battery cell preform 2000. The cleaning method may be physical cleaning or chemical cleaning. Physical cleaning refers to directly sweeping weld slag without altering the molecular structure of weld slag, such as negative pressure suction. Chemical cleaning refers to dissolving or melting weld slag by disrupting the chemical structure of weld slag through chemical reactions. To minimize damage to the battery cell preform 2000, the embodiments of this application use physical cleaning to sweep weld slag.

Referring to FIG. 1 and FIG. 2 together, the dust removal brush 11 can collect and clean weld slag that has fallen onto or been adsorbed on the hollow electrode post 2100 of the battery cell preform 2000. A material of the dust removal brush 11 may be a soft material such as rubber, silicone, plastic, or pig bristles to reduce damage to the battery cell preform 2000 caused by the dust removal brush 11 during cleaning.

The first drive assembly 20 is configured to provide power to the dust removal assembly 10 to drive the dust removal assembly 10 to move along the first direction X. The first direction X is related to the arrangement of the battery cell preform 2000, as long as weld slag on the battery cell preform 2000 can be cleaned. In some embodiments of this application, the shape of the hollow electrode post 2100 of the battery cell preform 2000 may be racetrack-shaped, circular, elliptical, rectangular, or square. When the shape of the hollow electrode post 2100 of the battery cell preform 2000 is racetrack-shaped or rectangular, the first direction X may be an extension direction of the long side of the cross-section of the hollow electrode post 2100, so that when the dust removal brush 11 moves along the first direction X, the dust removal brush 11 covers a larger area, requiring fewer back-and-forth movements. When the shape of the hollow electrode post 2100 of the battery cell preform 2000 is circular, the first direction X may be an extension direction of the diameter of the hollow electrode post 2100. When the shape of the hollow electrode post 2100 of the battery cell preform 2000 is square, the first direction X may be an extension direction of any side. The following embodiments are based on an example in which the hollow electrode post 2100 of the battery cell preform 2000 is racetrack-shaped, the long side of the cross-section of the hollow electrode post 2100 is horizontal, the short side is vertical, and the first direction X is the extension direction of the long side of the cross-section of the hollow electrode post 2100. That is, the battery cell preform 2000 is arranged parallel to the horizontal direction, and the top wall of the housing 2400 is perpendicular to the horizontal direction to reduce the risk of weld slag entering the interior of the battery cell preform 2000 under gravity after welding.

Further, in some embodiments, the first drive assembly 20 includes a cylinder mounting plate 21, a transverse cylinder 22, and a transverse slide block (not shown in the figures). The transverse cylinder 22 is mounted on the cylinder mounting plate 21, and a piston rod of the transverse cylinder 22 is connected to the transverse slide block via a cylinder connection block. The cylinder mounting plate 21 is provided with transverse slide rails 23 on opposite sides along a movement direction of the piston rod of the transverse cylinder 22, the transverse slide blocks being respectively disposed on the corresponding transverse slide rails 23.

In some embodiments, the dust removal assembly 10 further includes a dust removal cover 12, where the dust removal brush 11 is disposed within the dust removal cover 12 and is configured to be able to move back and forth along the first direction X within the dust removal cover 12.

Specifically, the shape and size of the dust removal cover 12 match the shape and size of the hollow electrode post 2100, and the dust removal cover 12 is configured to be able to cover the hollow electrode post 2100 of the battery cell preform 2000, for example, by sleeving the outside of the hollow electrode post 2100 to isolate the hollow electrode post 2100 of the battery cell preform 2000 from the external environment. This reduces the risk of weld slag splashing or scattering to other parts or the environment during the process of the dust removal assembly 10 cleaning weld slag, thereby reducing contamination. Additionally, the dust removal cover 12 limits the movement range of the dust removal brush 11, reducing contact between the dust removal brush 11 and other parts, thereby reducing scattering of weld slag from the dust removal brush 11. Further, in some embodiments, the dust removal apparatus 1 includes a dust removal cover mounting plate 100, and the dust removal assembly 10 can be mounted on the cylinder mounting plate 21 via the dust removal cover mounting plate 100.

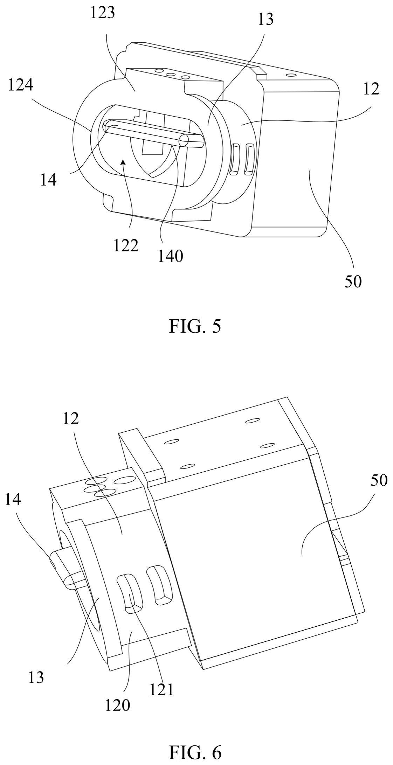

Referring to FIG. 5 and FIG. 6 together, FIG. 5 is a schematic structural diagram of a dust removal cover 12, a plug 14, and a mounting cavity 50 according to some embodiments of this application; and FIG. 6 is a schematic structural diagram of a dust removal cover 12, a plug 14, and a mounting cavity 50 according to some other embodiments.

In some embodiments, a sidewall 120 of the dust removal cover 12 is provided with an air inlet 121. Specifically, the dust removal cover 12 is a hollow cylindrical body with openings at two ends, and the air inlet 121 may be located at any position on an annular sidewall of the hollow cylindrical body.

The sidewall 120 of the dust removal cover 12 refers to an annular plate with a certain thickness that curls and surrounds to form an internal accommodation space, with at least one end open. The air inlet 121 is provided on the sidewall 120 of the dust removal cover 12 and penetrates the sidewall 120. The air inlet 121 allows external air to enter the dust removal cover 12, enabling weld slag dislodged by the dust removal brush 11 to be carried away by the airflow, thereby achieving the purpose of cleaning weld slag.

Further, in some embodiments, a port 122 of the dust removal cover 12 is provided with a flexible protective sleeve 13.

The port 122 of the dust removal cover 12 is an opening formed at the end portion of the sidewall 120 of the dust removal cover 12. The port 122 of the dust removal cover 12 is configured to allow the hollow electrode post 2100 to be inserted into the dust removal cover 12. The flexible protective sleeve 13 may surround the port 122 of the dust removal cover 12, which can protect the port 122 of the dust removal cover 12, and can also reduce damage caused by the port 122 of the dust removal cover 12 to the hollow electrode post 2100 or other components of the battery cell preform 2000 during the process of aligning and installing the dust removal cover 12 to the battery cell preform 2000.

In some embodiments, the port 122 of the dust removal cover 12 includes two opposite long sides 123 and two opposite short sides 124, where the long sides 123 extend along the first direction X, and the short sides 124 are respectively connected to the two long sides 123.

The long sides 123 of the port 122 are straight sides parallel to the first direction X, and the short sides 124 of the port 122 are curved sides protruding outward from the port 122 of the dust removal cover 12, thereby making the shape of the port 122 of the dust removal cover 12 match the shape of the hollow electrode post 2100 of the battery cell preform 2000. This allows the dust removal cover 12 to exactly cover the hollow electrode post 2100 of the battery cell preform 2000, preventing easy detachment of the two components and exposure of the hollow electrode post 2100 of the battery cell preform 2000.

In some embodiments, the dust removal assembly 10 further includes a plug 14, where the plug 14 is disposed within the dust removal cover 12.

The plug 14 is configured to be able to press onto an interior of the hollow electrode post 2100 of the battery cell preform 2000, sealing a gap 2200 at a bottom opening of the hollow electrode post 2100 of the battery cell preform 2000.

In the embodiments of this application, the plug 14 is disposed within the dust removal cover 12, and the plug 14 can be pressed onto the interior of the hollow electrode post 2100 of the battery cell preform 2000, sealing the gap 2200 at the bottom opening of the hollow electrode post 2100 of the battery cell preform 2000, thereby reducing the risk of weld slag entering the interior of the battery cell preform 2000 through the gap 2200 at the bottom opening of the hollow electrode post 2100.

In some embodiments, one end of the plug 14 extends out of the port 122 of the dust removal cover 12, facilitating its insertion into and extension through the gap 2200 at the bottom opening of the hollow electrode post 2100, thereby reducing the risk of weld slag entering the interior of the battery cell preform 2000 and causing contamination.

Further, in some embodiments, the plug 14 is spaced apart from an inner wall surface of the dust removal cover 12 and extends along the first direction X. In some embodiments, the dust removal brush 11 is located at the bottom of the plug 14, where the bottom is a side of the plug 14 closer to the ground. To further reduce the risk of weld slag entering the interior of the battery cell preform 2000 under gravity after welding, when the battery cell preform 2000 is arranged parallel to the horizontal direction, the electrode tab 2300 is located at the bottom of the gap 2200, that is, the electrode tab 2300 is located on a side of the gap 2200 closer to the ground. The dust removal brush 11 located at the bottom of the plug 14, so that the plug 14 seals the gap 2200, allowing the dust removal brush 11 to clean weld slag around the electrode tab 2300. This further reduces the risk of weld slag falling, without obstructing the movement of the dust removal brush 11 along the first direction X.

Further, in some embodiments, a surface 140 of the plug 14 close to the dust removal brush 11 is a planar surface, and the dust removal brush 11 is cylindrical and is tangent to or spaced apart from the planar surface.

The dust removal brush 11 is cylindrical, which, compared to other shapes such as cuboid, prism, or pyramid, minimizes air resistance during movement. Additionally, the absence of edges makes it easier to clean corner areas. The surface 140 of the plug 14 close to the dust removal brush 11 is a planar surface and is tangent to or spaced apart from the dust removal brush 11, allowing the dust removal brush 11 to translate along an extension direction of the planar surface of the plug 14, and ensuring that the plug 14 can seal the gap 2200 at the bottom opening of the hollow electrode post 2100 without obstructing the translation of the dust removal brush 11. In some embodiments, the surface 140 of the plug 14 close to the dust removal brush 11 is a planar surface and is tangent to the dust removal brush 11, allowing the dust removal brush 11 to clean a larger area.

Further, in some embodiments, a material of the plug 14 includes rubber or silicone. The rubber or silicone material can provide the plug 14 with elasticity, thereby reducing damage to the hollow electrode post 2100 during insertion of the plug 14 into the gap 2200 at the bottom opening of the hollow electrode post 2100, and improving the sealing performance on the gap 2200.

In some embodiments, the dust removal apparatus 1 further includes a vibration assembly 30, where the vibration assembly 30 is connected to the dust removal brush 11 and is configured to be able to cause the dust removal brush 11 to vibrate; and the first drive assembly 20 is further connected to the vibration assembly 30 and is configured to be able to drive the dust removal brush 11 and the vibration assembly 30 to move together along the first direction X.

The vibration assembly 30 can utilize high-frequency vibration to dislodge detachable weld slag and adsorbed weld slag from the cleaned weld marks, and can cause the dust removal brush 11 to vibrate while moving during cleaning of weld slag, improving cleaning efficiency and cleaning effect.

The vibration assembly 30 can be implemented by a motor. The motor, also known as electric motor, is an electromagnetic apparatus that converts or transmits electrical energy based on the law of electromagnetic induction. Specifically, in one embodiment, the vibration assembly 30 includes a vibration motor 31 and a mounting shaft 32, where the vibration motor 31 is disposed outside the dust removal cover 12, one end of the mounting shaft 32 is mounted on the vibration motor 31, and the other end extends into the dust removal cover 12 and is connected to the dust removal brush 11. The dust removal brush 11 and the vibration assembly 30 move together along the first direction X, while the plug 14 and the dust removal cover 12 remain stationary.

The mounting shaft 32 connects the dust removal brush 11 and the vibration motor 31, enabling the vibration motor 31 to provide power for the vibration of the dust removal brush 11. In the embodiments of this application, the vibration assembly 30 includes the vibration motor 31 and the mounting shaft 32 to implement vibration of the dust removal brush 11, making the apparatus simple, easy to install, and easy to implement.

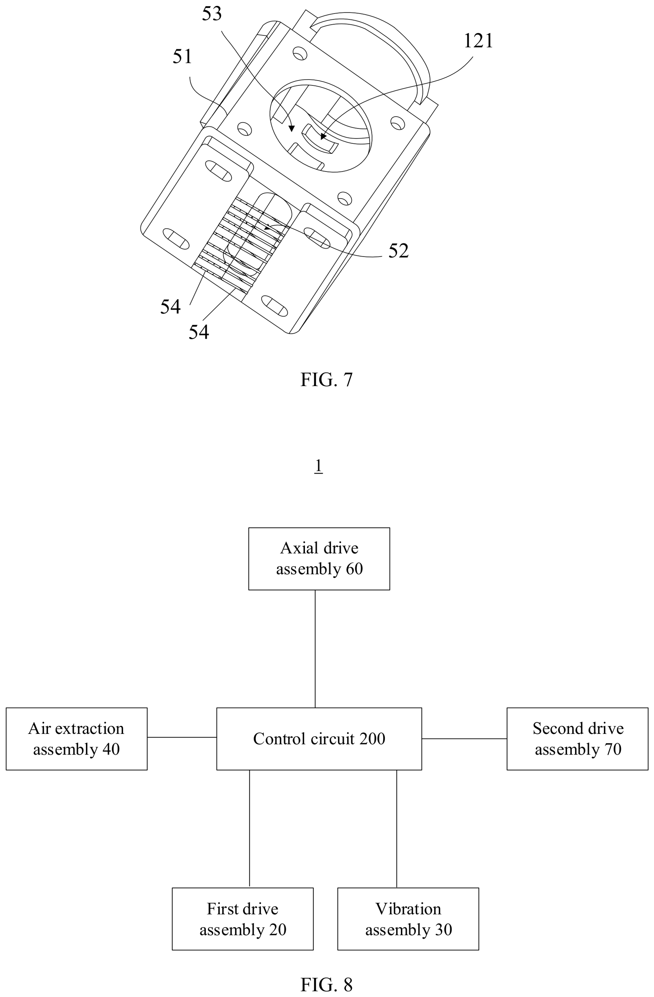

Further, referring to FIG. 7, FIG. 7 is a schematic structural diagram of a mounting cavity according to some embodiments of this application.

The dust removal apparatus 1 further includes an air extraction assembly 40 and a mounting cavity 50. The air extraction assembly 40 is in communication with the mounting cavity 50, one end of the dust removal cover 12 facing away from the port is in communication with the mounting cavity 50, and a sidewall 51 of the mounting cavity 50 at an end facing away from the dust removal cover 12 is provided with a through hole 52, where the mounting shaft 32 extends through the through hole 52 into the dust removal cover 12 or is connected to the dust removal brush 11 within the dust removal cover 12; and the through hole 52 extends along the first direction X.

The air extraction assembly 40 is configured to extract air during the process of the dust removal brush 11 sweeping weld slag, creating a negative pressure within the mounting cavity 50 and the dust removal cover 12, thereby allowing loose weld slag to enter the air extraction assembly 40. In some embodiments of this application, the air extraction assembly 40 may be implemented by a vacuum apparatus.

The mounting cavity 50 is connected between the dust removal cover 12 and the air extraction assembly 40, providing a buffer space to reduce the risk of excessive negative pressure damaging the dust removal brush 11 and/or the battery cell preform 2000 within the dust removal cover 12. The sidewall 51 of the mounting cavity 50 at the end facing away from the dust removal cover 12 is provided with the through hole 52, and the through hole 52 allows the mounting shaft 32 to pass through and allows the mounting shaft 32 to move along the first direction X and drive the dust removal brush 11 to move together along the first direction X.

In some embodiments, the mounting cavity 50 has an air outlet 53 in communication with the air extraction assembly 40. In some embodiments, along the first direction X, the air outlet 53 and the air inlet 121 of the dust removal cover 12 are located on opposite sides of the dust removal cover 12 and the mounting cavity 50.

The air outlet 53 is an opening penetrating the sidewall 51 of the mounting cavity 50. The air outlet 53 of the mounting cavity 50 allows gases within the dust removal cover 12 and the mounting cavity 50 to be extracted through the air extraction assembly 40. Further, the air outlet 53 is disposed in the mounting cavity 50 and the air inlet 121 is disposed in the dust removal cover 12, so that air from the environment can continuously enter the dust removal cover 12 and the mounting cavity 50 for ventilation during the dust removal process, allowing airflow to continuously carry away weld slag and reducing the risk of damage to the battery cell preform 2000 caused by excessive negative pressure within the dust removal cover 12 due to over-extraction by the air extraction assembly 40 during the dust removal process. Along the first direction X, the air outlet 53 and the air inlet 121 of the dust removal cover 12 are located on opposite sides of the dust removal cover 12 and the mounting cavity 50, that is, on opposite sides of the dust removal brush 11, allowing gas to flow from one side of the dust removal brush 11 to the other side to carry away weld slag from the dust removal brush 11 more easily.

In some embodiments, the sidewall 51 of the mounting cavity 50 facing away from the dust removal cover 12 is provided with two flexible shielding members 54; and along a third direction Z perpendicular to the first direction X, the two flexible shielding members 54 are respectively disposed on opposite sides of the through hole 52 and are joined together to cover the through hole 52.

The flexible shielding members 54 are deformable or bendable components. For example, taking the first direction X being the horizontal direction as an example, the third direction Z is the vertical direction, which can also be considered as the up-and-down direction. The two flexible shielding members 54 are respectively disposed on opposite sides of the through hole 52 and are joined together to cover the through hole 52, allowing the through hole 52 to be covered by the two flexible shielding members 54 during the movement of the mounting shaft 32 along the first direction within the through hole 52. This reduces the risk of airflow entering the mounting cavity 50 through the through hole 52, and ensures that airflow enters the mounting cavity 50 primarily through the air inlet 121, facilitating the removal of weld slag from the dust removal brush 11.

Further, in one specific embodiment, the flexible shielding members 54 are brushes, further sweeping or adsorbing the weld slag on the mounting shaft 32 extending through the through hole 52. This can reduce the weld slag adsorbed on the mounting shaft 32, and reduce the risk of weld slag splashing into the interior of the battery cell preform 2000 during vibration of the mounting shaft 32.

In some embodiments, the brush is provided with a magnetic member (not shown in the figures) at an end portion, and the magnetic members at the end portions of the two brushes attract each other, allowing the two flexible shielding members 54 to close quickly under magnetic attraction after the mounting shaft 32 passes through.

The magnetic member is a component with magnetic attraction, which may be a component that generates magnetic attraction during use or a component that can be attracted to components with magnetic attraction, such as a permanent magnet.

In some embodiments, the mounting shaft 32 includes a ferromagnetic material, so that permanent magnets at the end portions of the brushes are attracted to the mounting shaft 32 wherever the mounting shaft 32 moves, better sealing the through hole 52 and reducing the risk of airflow entry.

In some embodiments, the mounting shaft 32 is sleeved with a cover plate (not shown in the figures), where the cover plate is configured to be able to move along the first direction X together with the mounting shaft 32 and cover the through hole 52 during movement. Using a cover plate can seal the through hole 52 much more effectively, reducing the risk of airflow entry.

In some embodiments, the dust removal apparatus 1 further includes an axial drive assembly 60, where the axial drive assembly 60 is connected to the mounting shaft 32, and the axial drive assembly 60 is configured to be able to drive the dust removal brush 11 to extend and retract along an axial direction of the mounting shaft 32.

The axial drive assembly 60 is a component that drives along the axial direction of the mounting shaft 32, such as a motor or a cylinder, that is, the axial drive assembly 60 can drive the dust removal brush 11 to extend and retract along the axial direction of the mounting shaft 32, where the axial direction of the mounting shaft 32 is parallel to the second direction Y and perpendicular to the third direction Z. In some embodiments, the axial drive assembly 60 may include an axial transverse cylinder 61 and an axial transverse slide block 62.

After dust removal is completed, the axial drive assembly 60 can drive the mounting shaft 32 to move with the dust removal brush 11 in a direction leaving the battery cell preform 2000, causing the dust removal brush 11 to move to the interior of the dust removal cover 12 or the mounting cavity 50, so as to clean residual weld slag on the dust removal brush 11 through the negative pressure within the dust removal cover 12. This eliminates the need for additional cleaning of the dust removal brush 11 and the dust removal cover 12 after the dust removal apparatus 1 is detached from the battery cell preform 2000, thereby reducing the risk of contaminating other battery cell preforms 2000 when the dust removal apparatus 1 is reused to clean these battery cell preforms 2000.

In some embodiments, the dust removal apparatus 1 further includes a second drive assembly 70, where the second drive assembly 70 is connected to the dust removal assembly 10 and the vibration assembly 30, and the second drive assembly 70 is configured to be able to drive the dust removal assembly 10 and the vibration assembly 30 to move along a second direction Y, the second direction Y intersecting with the first direction X.

The second drive assembly 70 is configured to provide power for the movement of the dust removal assembly 10 and the vibration assembly 30. In some embodiments, the second drive assembly 70 may include a support plate 71, a power mechanism 72, and a first slide rail 73, where the first slide rail 73 and the dust removal cover mounting plate 100 are respectively disposed on two sides of the support plate 71, and the power mechanism 72 is mounted on the dust removal cover mounting plate 100 and is configured to drive the dust removal cover mounting plate 100 to drive the dust removal assembly 10 to move along the second direction Y.

In this way, the dust removal assembly 10 can be aligned and installed to the battery cell preform 2000 to be cleaned. The operation is simple, with the manual installation step omitted, thereby enhancing automation.

In some embodiments, the first direction X and the second direction Y are perpendicular to each other and both parallel to the horizontal direction, that is, the second drive assembly 70 and the second drive assembly 70 are transverse drive assemblies. Therefore, the dust removal apparatus 1 of this application can clean battery cell preforms 2000 placed horizontally (that is, placed level).

Further, in some embodiments, the dust removal apparatus 1 further includes a second direction Y transverse barrier 80, where the dust removal assembly 10 is disposed on the second direction Y transverse barrier 80, and the second direction Y transverse barrier 80 is configured to limit a movement distance of the dust removal assembly 10 in a direction approaching the battery cell preform 2000, so that the dust removal assembly 10 stops after reaching a preset position in the direction approaching the battery cell preform 2000, thereby reducing the risk of damaging the battery cell preform 2000 due to excessive movement of the dust removal assembly 10.

Referring to FIG. 8, FIG. 8 is a schematic structural diagram of a dust removal apparatus according to some other embodiments of this application.

The dust removal apparatus 1 further includes a control circuit 200. The control circuit 200 is electrically connected to the vibration assembly 30, the first drive assembly 20, the second drive assembly 70, the air extraction assembly 40, and the axial drive assembly 60 each.

The control circuit 200 is a circuit used for controlling mechanical and electrical devices, which may include a PCB board, a chip, and the like. The control circuit 200 may be configured to: in response to receipt of a clean instruction, cause the air extraction assembly 40 to extract air from the dust removal cover 12 to create a negative pressure, and cause the second drive assembly 70 to drive the dust removal assembly 10 to move along the second direction Y from an initial position toward a battery cell preform 2000 to a preset position; in response to the dust removal assembly 10 having moved to the preset position, cause the vibration assembly 30 to vibrate the dust removal brush 11 and cause the first drive assembly 20 to drive the dust removal assembly 10 to move back and forth along the first direction X, to clean the battery cell preform 2000; and in response to completion of cleaning, cause the second drive assembly 70 to drive the dust removal assembly 10 to move along the second direction Y from the preset position back to the initial position, and cause the axial drive assembly 60 to control the dust removal brush 11 to retract from an original position toward an interior of the dust removal cover 12 along the axial direction of the mounting shaft 32, stay for a preset time, and then extend back to the original position.

Therefore, in this application, the control circuit 200 is arranged to control the operation of the vibration assembly 30, the first drive assembly 20, the second drive assembly 70, the air extraction assembly 40, and the axial drive assembly 60, allowing for precise current control to ensure the normal operation of the entire dust removal apparatus 1, while providing circuit safety protection and circuit conversion functions.

Referring to FIG. 3 and FIG. 4 again, in some embodiments, the dust removal apparatus 1 includes two symmetrically arranged and spaced dust removal assemblies 10, and the first drive assembly 20, the vibration assembly 30, the axial drive assembly 60, the second drive assembly 70, the air extraction assembly 40, and/or the mounting cavity 50 driving the movement of the two dust removal assemblies 10 and/or the dust removal brush 11, allowing weld slag to be cleaned simultaneously from the two hollow electrode posts 2100 of the battery cell preform 2000, improving cleaning efficiency. The two dust removal assemblies 10 may share the first drive assembly 20 and the second drive assembly 70.

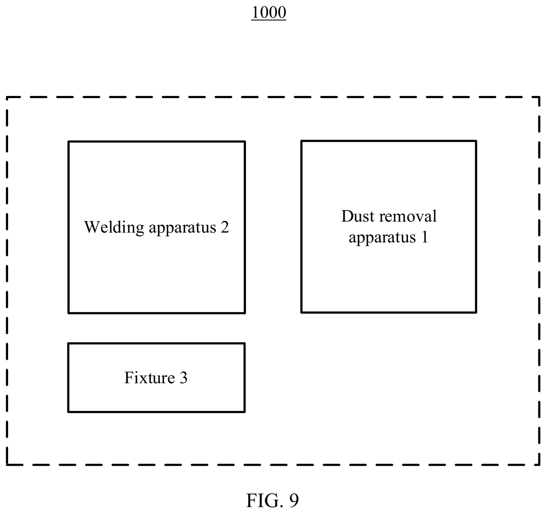

Referring to FIG. 9, FIG. 9 is a schematic structural diagram of a battery production system 1000 according to some embodiments of this application. The battery production system 1000 includes a dust removal apparatus 1, a welding apparatus 2, and a fixture 3.

The dust removal apparatus 1 is located downstream the welding apparatus 2; and the fixture 3 is configured to fix the battery cell preform 2000. The fixture 3 sequentially passes through the welding apparatus 2 and the dust removal apparatus 1 to bring the battery cell preform 2000 to a position of the welding apparatus 2 and a position of the dust removal apparatus 1, respectively. The welding apparatus 2 is configured to weld the hollow electrode post 2100 and the electrode tab 2300 of the battery cell preform 2000. The dust removal apparatus 1 is the dust removal apparatus 1 provided in any one of the above embodiments, configured to clean the welded battery cell preform 2000.

In the embodiments of this application, the dust removal apparatus 1 includes the dust removal assembly 10 and the first drive assembly 20, the dust removal assembly 10 includes the dust removal brush 11, and the first drive assembly 20 is configured to be able to drive the dust removal brush 11 to move along the first direction X. Since the dust removal brush 11 can sweep weld slag while moving, weld slag can be removed over a larger area on the hollow electrode post 2100 of the battery cell preform 2000. Further, the dust removal brush 11 can clean strip-shaped weld marks, thereby improving a cleaning effect of the dust removal apparatus 1.

In the several embodiments provided in this application, it should be understood that the disclosed systems, apparatuses, and methods may be implemented in other ways. For example, the apparatus embodiments described above are merely illustrative. For example, the division of units is only a logical function division, and in actual implementation, other division methods may be used, such as multiple units or components being combined or integrated into another system, or some features being omitted or not implemented. Additionally, the coupling, direct coupling, or communication connections shown or discussed may be indirect coupling or communication connections through some interfaces, apparatuses, or units, and may be electrical, mechanical, or other forms.

Furthermore, the functional units in the embodiments of this application may be integrated into one processing unit, or each unit may exist physically separately, or two or more units may be integrated into one unit. The integrated units may be implemented in the form of hardware or software functional units.

The above descriptions are only embodiments of this application and are not intended to limit the patent scope of this application. Any equivalent structural or procedural transformations made based on the contents of the specification and drawings of this application, or direct or indirect application in other related technical fields, are equally included within the patent protection scope of this application.

## Claims

1. A dust removal apparatus, comprising:
a dust removal assembly, comprising a dust removal brush;
a first drive assembly, connected to the dust removal brush and configured to be able to drive the dust removal brush to move along a first direction; and
a dust removal cover, wherein the dust removal brush is disposed within the dust removal cover and is configured to be able to move back and forth along the first direction within the dust removal cover;
wherein a port of the dust removal cover comprises two opposite long sides and two opposite short sides, the long sides extend along the first direction, and the short sides are respectively connected to the two long sides.

2. A dust removal apparatus, comprising:
a dust removal assembly, comprising a dust removal brush;
a first drive assembly, connected to the dust removal brush and configured to be able to drive the dust removal brush to move along a first direction; and
a dust removal cover, wherein the dust removal brush is disposed within the dust removal cover and is configured to be able to move back and forth along the first direction within the dust removal cover;
wherein the dust removal assembly further comprises a plug, and the plug is disposed within the dust removal cover.

3. The dust removal apparatus according to claim 2, wherein a sidewall of the dust removal cover is provided with an air inlet.

4. The dust removal apparatus according to claim 2, wherein a port of the dust removal cover is provided with a flexible protective sleeve.

5. The dust removal apparatus according to claim 2, wherein a port of the dust removal cover comprises two opposite long sides and two opposite short sides, the long sides extend along the first direction, and the short sides are respectively connected to the two long sides.

6. The dust removal apparatus according to claim 2, wherein one end of the plug extends out of a port of the dust removal cover.

7. The dust removal apparatus according to claim 2, wherein the plug is spaced apart from an inner wall surface of the dust removal cover and extends along the first direction, and the dust removal brush is located at a bottom of the plug.

8. The dust removal apparatus according to claim 7, wherein a surface of the plug close to the dust removal brush is a planar surface, and the dust removal brush is cylindrical and is tangent to or spaced apart from the planar surface.

9. The dust removal apparatus according to claim 2, wherein a material of the plug comprises rubber or silicone.

10. The dust removal apparatus according to any one of claims 2 to 9, wherein the dust removal apparatus further comprises a vibration assembly, the vibration assembly is connected to the dust removal brush and is configured to be able to cause the dust removal brush to vibrate; and the first drive assembly is further connected to the vibration assembly and is configured to be able to drive the dust removal brush and the vibration assembly to move together along the first direction.

11. A dust removal apparatus, comprising:
a dust removal assembly, comprising a dust removal brush; and
a first drive assembly, connected to the dust removal brush and configured to be able to drive the dust removal brush to move along a first direction;
wherein the dust removal apparatus further comprises a vibration assembly, wherein the vibration assembly is connected to the dust removal brush and is configured to be able to cause the dust removal brush to vibrate; and the first drive assembly is further connected to the vibration assembly and is configured to be able to drive the dust removal brush and the vibration assembly to move together along the first direction.

12. The dust removal apparatus according to claim 11, wherein the dust removal assembly further comprises a dust removal cover, wherein the dust removal brush is disposed within the dust removal cover and is configured to be able to move back and forth along the first direction within the dust removal cover; and the vibration assembly comprises a vibration motor and a mounting shaft, wherein the vibration motor is disposed outside the dust removal cover, one end of the mounting shaft is mounted on the vibration motor, and the other end extends into the dust removal cover and is connected to the dust removal brush.

13. The dust removal apparatus according to claim 12, wherein the dust removal apparatus further comprises an air extraction assembly and a mounting cavity, wherein the air extraction assembly is in communication with the mounting cavity, one end of the dust removal cover far away from a port the dust removal cover is in communication with the mounting cavity, a sidewall of the mounting cavity at an end facing away from the dust removal cover is provided with a through hole, the mounting shaft extends through the through hole into the dust removal cover, and the through hole extends along the first direction.

14. The dust removal apparatus according to claim 13, wherein the mounting cavity has an air outlet in communication with the air extraction assembly; and along the first direction, the air outlet and an air inlet of the dust removal cover are located on opposite sides of the dust removal cover and the mounting cavity.

15. The dust removal apparatus according to claim 13, wherein the sidewall of the mounting cavity facing away from the dust removal cover has two flexible shielding members; and along a third direction perpendicular to the first direction, the two flexible shielding members are respectively disposed on opposite sides of the through hole and are joined together to cover the through hole.

16. The dust removal apparatus according to claim 15, wherein the flexible shielding member is a brush.

17. The dust removal apparatus according to claim 16, wherein an end portion of the brush is provided with a magnetic member, the magnetic members at the end portions of the two brushes attract each other, and the mounting shaft comprises a ferromagnetic material.

18. The dust removal apparatus according to claim 13, wherein the mounting shaft is sleeved with a cover plate, wherein the cover plate is configured to be able to move along the first direction together with the mounting shaft and cover the through hole during movement.

19. The dust removal apparatus according to claim 13, wherein the dust removal apparatus further comprises an axial drive assembly, wherein the axial drive assembly is connected to the mounting shaft, and the axial drive assembly is configured to be able to drive the dust removal brush to extend and retract along an axial direction of the mounting shaft.

20. The dust removal apparatus according to claim 19, wherein the dust removal apparatus further comprises a second drive assembly, wherein the second drive assembly is connected to the dust removal assembly and the vibration assembly, and the second drive assembly is configured to be able to drive the dust removal assembly and the vibration assembly to move along a second direction, the second direction intersecting with the first direction.

21. The dust removal apparatus according to claim 20, wherein the first direction and the second direction are perpendicular to each other and both parallel to a horizontal direction.

22. The dust removal apparatus according to claim 20, wherein the dust removal apparatus further comprises a control circuit, wherein the control circuit is electrically connected to the vibration assembly, the first drive assembly, the second drive assembly, the air extraction assembly, and the axial drive assembly, respectively; and the control circuit is configured to:
in response to receipt of a clean instruction, cause the air extraction assembly to extract air from the dust removal cover to create a negative pressure, and cause the second drive assembly to drive the dust removal assembly to move along the second direction from an initial position toward a battery cell preform to a preset position;
in response to the dust removal assembly having moved to the preset position, cause the vibration assembly to vibrate the dust removal brush and cause the first drive assembly to drive the dust removal assembly to move back and forth along the first direction, to clean the battery cell preform; and
in response to completion of cleaning, cause the second drive assembly to drive the dust removal assembly to move along the second direction from the preset position back to the initial position, and cause the axial drive assembly to control the dust removal brush to retract from an original position toward an interior of the dust removal cover along the axial direction of the mounting shaft, stay for a preset time, and then extend back to the original position.

23. The dust removal apparatus according to claim 20, wherein the dust removal apparatus comprises: two symmetrically arranged and spaced dust removal assemblies, and the first drive assembly, the vibration assembly, the axial drive assembly, the second drive assembly, the air extraction assembly, and/or the mounting cavity driving the movement of the two dust removal assemblies and/or dust removal brushes respectively.

24. A battery production system, comprising a welding apparatus and a dust removal apparatus, wherein the dust removal apparatus is the dust removal apparatus according to any one of claims 1 to 23.
